Europäisches Patentamt

European Patent Office

Office européen des brevets

(19)

(11)  **EP 0 548 505 B1**

(12)  **EUROPÄISCHE PATENTSCHRIFT**

(45) Veröffentlichungstag und Bekanntmachung des
Hinweises auf die Patenterteilung:
**28.02.1996  Patentblatt 1996/09**

(51) Int. Cl.$^6$: **B66B 13/14**,  E05F 15/14

(21) Anmeldenummer: **92118578.1**

(22) Anmeldetag: **30.10.1992**

(54) **Verfahren und Vorrichtung zur Bestimmung der dynamischen Masse un der mittleren Reibkraft einer Aufzugstüre**

Method and apparatus to determine the dynamic mass and average frictional force of a lift door

Méthode et appareil pour déterminer la masse dynamique et les forces de frottement moyennes d'une porte d'ascenseur

(84) Benannte Vertragsstaaten:
**AT CH DE ES FR GB IT LI**

(30) Priorität: **24.12.1991 CH 3844/91**

(43) Veröffentlichungstag der Anmeldung:
**30.06.1993  Patentblatt 1993/26**

(73) Patentinhaber: **INVENTIO AG**
**CH-6052 Hergiswil NW (CH)**

(72) Erfinder: **Gerstenkorn, Bernhard**
**CH-6010 Kriens (CH)**

(56) Entgegenhaltungen:
**CH-A-  399 775          FR-A- 2 513 689**
**GB-A- 2 103 710**

EP 0 548 505 B1

**Beschreibung**

Die Erfindung bezieht sich auf ein Verfahren und eine Vorrichtung zur Bestimmung der dynamischen Masse und der mittleren Reibkraft insbesondere einer Aufzugstüre, wobei ein Massesystem mindestens einem, nicht-angetriebenen, eine Teststrecke aufweisenden Bewegungsablauf unterzogen wird und aus dabei gemessenen kinematischen Parametern mindestens ein weiterer, das Massesystem charakterisierender Parameter berechnet wird.

Mit solchen Verfahren kann bei Aufzugstüren zu jeder Schliessgeschwindigkeit die entsprechende kinetische Energie bestimmt werden, welche im Falle des Einklemmens an der Schliesskante wirksam würde. Umgekehrt ist es möglich, bei vorgegebener, sicherheitstechnisch maximal zulässiger Schliessenergie die entsprechende Schliessgeschwindigkeit zu ermitteln und den Türantrieb darauf einzustellen. Allgemein eignet sich das Verfahren zur numerischen Bestimmung von Systemparametern, welche z.B. bei der Optimierung oder vorsorglichen Wartung eines Massesystems von Bedeutung sind.

Automatische Schiebetüren, wie sie z.B. bei Hochleistungsaufzügen angewendet werden, müssen verschiedenen Vorschriften genügen. So ist z.B. aus Gründen des Einklemmschutzes gefordert, dass die maximale Bewegungsenergie aller mechanisch miteinander verbundenen Teile bei einer mittleren Schliessgeschwindigkeit einen vorgegebenen Maximalwert (z.B. 10 Joule) nicht überschreiten darf. Dies setzt für die mittlere Schliessgeschwindigkeit einen oberen Grenzwert. Andererseits sind bei Hochleistungsaufzügen kurze Türschliesszeiten Voraussetzung für eine gute Transportleistung. Man ist deshalb darauf angewiesen, die grösstmögliche, unter Wahrung des Einklemmschutzes noch zulässige maximale Schliessgeschwindigkeit voll zu nutzen und den Türantrieb darauf einzustellen. Hierzu ist es aber notwendig, die zulässige maximale Schliessgeschwindigkeit zu kennen.

Bei einer automatischen Schiebetüre ist die maximale Schliessgeschwindigkeit vmax durch die sicherheitstechnisch maximal zulässige Bewegungsenergie Ekmax und die dynamische Türmasse md bestimmt. Es gilt: vmax = 2·Ekmax / md . Da Ekmax durch die Sicherheitsvorschriften vorgegeben ist, läuft die Berechnung von vmax darauf hinaus, die dynamische Türmasse md zu bestimmen. In ihr sind alle beweglichen, miteinander verbundenen Massen des Türsystems zusammengefasst und auf die Translationsbewegung des hinsichtlich Einklemmen zu sichernden Türflügels bezogen. Dazu gehören alle Türflügel, Kopplungselemente und Mitnehmer, bewegliche Türüberwachungseinrichtungen, Schliessgewichte, Kabelverbindungen auf die Türflügel, Türflügelübersetzungen usw. Dabei gehen Türfelder welche sich z.B. bei Teleskop-Türen mit halber Geschwindigkeit bewegen, nur mit einem Viertel ihrer statischen Masse in die dynamische Masse ein. Es besteht also das Bedürfnis nach einem einfachen und genauen Verfahren, um bei Aufzugstüren die dynamische Türmasse md zu bestimmen.

Bisher wurden verschiedene, diesem Zweck dienende Methoden angewandt: Eine erste Methode besteht darin, für die einzelnen Türflügel mit einer Waage die statischen Massen zu bestimmen und dieselben dann, entsprechend den Antriebsübersetzungen, in dynamische Massen umzurechnen. Zusätzlich wird ein bestimmter Wert für die dynamische Masse des Antriebssystems dazuaddiert. Das Resultat wird permanent in der Türantriebselektronik gespeichert. Bei einer zweiten Methode wird ein spezielles Messsystem verwendet, welches in jedem Türsystem eingebaut ist und die dynamischen Türmassen automatisch bestimmt. Eine weitere Methode untersucht das Systemverhalten von Türsystemen bei verschiedenen, bekannten dynamischen Türmassen. Die Ergebnisse werden in der Türantriebssoftware gespeichert und daraus die dynamischen Türmassen beliebiger Türsysteme ermittelt.

Alle diese Methoden weisen den Nachteil auf, dass sie komplizierte und aufwendige Einrichtungen erfordern und zudem störempfindlich sowie ungenau sind.

Andererseits sind aus der CH-Patentschrift Nr. 399 775 ein Verfahren und eine Einrichtung bekannt geworden, um bei elektrischen Antrieben, insbesondere bei Förderantrieben, das Belastungsdrehmoment zu messen. Dieses Verfahren besteht darin, dass in einem zur Messung vorgesehenen Betriebszeitpunkt an der Antriebsmaschine mindestens kurzzeitig das Motordrehmoment 0 eingestellt wird und dass die an der Antriebsmaschine in diesem Betriebszustand eintretende Beschleunigung bzw. Verzögerung, welche in diesem Falle direkt ein Mass für das an der Antriebsmaschine angreifende Belastungsdrehmoment ist, gemessen wird. Zur Ermittlung der Beschleunigung bzw. Verzögerung wird am Anfang und am Ende eines vorbestimmten Zeitintervalles die Geschwindigkeit der Antriebsmaschine gemessen, die beiden Messwerte in einem Speicher gespeichert und in einem Ablesegerät die Differenz der beiden Messwerte gebildet. Dieses Verfahren besteht im wesentlichen also darin, den elektrischen Antrieb im Rahmen einer Lernfahrt eine Teststrecke nicht-angetrieben durchfahren zu lassen und dabei die auftretende Beschleunigung bzw. Verzögerung zu messen.

Die Einrichtung zur Durchführung des erfindungsgemässen Verfahrens besteht aus der Kombination einer Motordrehmoment-Abschalteinrichtung mit einer Beschleunigungs- bzw. Verzögerungsmesseinrichtung. Dabei ist die Motordrehmoment-Abschalteinrichtung als Schütz zur Unterbrechung der Speisung der Antriebsmaschine ausgebildet, während die Beschleunigungs- bzw. Verzögerungsmesseinrichtung einen mit der Antriebsmaschine gekuppelten, mit zu deren Drehzahl proportionaler Folgefrequenz Impulse erzeugenden Impulsgeber aufweist.

Der grundlegende Nachteil dieses Verfahrens besteht darin, dass das Belastungsdrehmoment nicht absolut, sondern nur bis auf eine Proportionalitätskonstante bestimmt werden kann.

Der vorgenannte Bewegungsablauf über eine Teststrecke führt nämlich auf nur eine Gleichung der Art $K = md \cdot a$ , mit

der gemessenen Beschleunigung a als Bekannte und der Kraft K sowie der dynamischen Masse md als Unbekannte. Zur absoluten Bestimmung der beiden Unbekannten K und md wäre eine zweite, unabhängige Gleichung aus einem zweiten Testlauf erforderlich. Die Fundstelle zeigt aber keine Möglichkeit, zwei solche Testläufe voneinander unabhängig zu machen, damit die entsprechenden beiden Gleichungen ebenfalls unabhängig sind und nach den beiden Unbekannten K und md aufgelöst werden können. Auch hat sich als nachteilig erwiesen, dass die gemessene Beschleunigung bzw. Verzögerung a nur "ein Mass" darstellt für das gesuchte an der Arbeitsmaschine angreifende Belastungsdrehmoment und dasselbe deshalb nur ungenau bestimmt werden kann. Seiner Anwendung z.B. zur Steuerung des Bremseinsatzpunktes oder des Bremsmomentes sind deshalb von der Genauigkeit her Grenzen gesetzt. Dies insbesondere bei Antrieben für Aufzüge in Leichtbauweise, da in diesem Falle die als Proportionalitätskonstante dienende dynamische Masse md in vermehrtem Masse durch die zu fördernde Last bestimmt wird und deshalb nicht nur unbekannt, sondern auch noch rasch veränderlich ist. Weiter muss ein Mangel grundsätzlicher Art darin gesehen werden, dass die in einem elektrischen Antrieb vorhandene Reibkraft Teil des zu ermittelnden Belastungsdrehmomentes ist und nicht separat bestimmt werden kann. Dies verunmöglicht die numerische Bestimmung aktuell vorliegender Reibungsverhältnisse und damit deren Überwachung für den vorsorglichen Unterhalt sowie deren Vergleich zur Qualitätssicherung. Hier will die Erfindung Abhilfe schaffen.

Dementsprechend ist es die Aufgabe der antragsgemässen Erfindung ein Verfahren und eine Einrichtung vorzuschlagen, um bei Systemen aus beweglich miteinander verbundenen Masseteilen die charakterisierenden kinematischen Parameter mit hoher Genauigkeit zu bestimmen. Verfahren und Vorrichtung sollen insbesondere ermöglichen, bei Schiebetürsystemen für Aufzüge die dynamische Masse und die mittlere Reibkraft aller beweglich miteinander verbundenen Teile numerisch zu bestimmen; und dies jederzeit, während des normalen Aufzugsbetriebes und ohne Verwendung spezieller, zusätzlicher Messeinrichtungen.

Gelöst wird diese Aufgabe erfindungsgemäss mit den Mitteln, wie sie in den Fassungen der unabhängigen Patentansprüche gekennzeichnet sind. Vorteilhafte Weiterbildungen sind in den abhängigen Ansprüchen angegeben.

Darüber hinaus weisen Verfahren und Einrichtung, die mit diesen Mitteln gestaltet sind noch verschiedene Vorteile auf, insbesondere bei Massesystemen, die Teil einer übergeordneten Anlage sind:

Ein erster Vorteil ergibt sich aus dem Umstande, dass bei der experimentellen Ermittlung der Türparameter die Aufzugstüre voll betriebsfähig in ihrer natürlichen Umgebung installiert ist, und dass die dabei verwendeten Lernfahrten sich nur unwesentlich von einer normalen Öffnungs- bzw. Schliessbewegung unterscheiden. Für die einzelnen Türparameter werden deshalb jene Werte ermittelt, die im normalen Betrieb der Aufzugstüre auch tatsächlich auftreten. Weiter ist von Vorteil, dass das Verfahren durch Nutzung des bereits vorhandenen Türantriebes realisiert wird. Es sind also keine speziellen Einrichtungen erforderlich, welche Fehlerquellen darstellen könnten, sondern der vorhandene Türantrieb wird für einen neuen Zweck verwendet, für den er ursprünglich nicht vorgesehen war. Zusätzlich ist nur ein dem Verfahren entsprechender Algorithmus, und der kann im bestehenden Mikroprozessorsystem des Türantriebes leicht implementiert werden. Auch hat sich gezeigt, dass das erfindungsgemässe Verfahren z.B. über eine Datensammelschiene, leicht in bestehende Aufzugssteuerungen integriert werden kann. Es eignet sich demnach vorzüglich, um herkömmliche Türantriebe sicherheitstechnisch nachzurüsten und sie dadurch nachträglich in ihrem Betriebsverhalten gesichert und im Unterhalt komfortabel zu machen. Ein weiterer Vorteil besteht darin, dass sich das Verfahren dazu eignet, physikalische Kenngrössen zeitgerecht zu erfassen, statistisch auszuwerten und zu protokollieren, und dies als Interrupt des übergeordneten Aufzugsbetriebes. Solche Statistiken eignen sich zur direkten Auswertung für den vorsorglichen Unterhalt und die Qualitätssicherung, sowie als Sicherheitsnachweis zu Handen der Behörden.

Die Erfindung ist im folgenden anhand der Beschreibung sowie der Zeichnung in ihrer Anwendung bei der Bestimmung der dynamischen Masse und der mittleren Reibkraft einer Aufzugsschiebetüre erläutert, doch ist das hier gezeigte Verfahren allgemein anwendbar, wenn es darum geht, bei einem System beweglich verbundener Masseteile die charakterisierenden Parameter, numerisch zu bestimmen. In der lediglich dieses Anwendungsbeispiel der Erfindung darstellenden Zeichnung zeigen:

Fig. 1     schematisch, Disposition und prinzipieller Aufbau eines Schiebetürsystems 1 für Aufzugskabinen zur Anwendung des erfindungsgemässen Verfahrens für die numerische Bestimmung der dynamischen Masse md und der mittleren Reibkraft Fr* aller miteinander verbundenen Systemteile.

Fig. 2     schematisch, Geschwindigkeit-/Wegdiagramme zur Definition der Öffnungslernfahrt ÖL und der Schliesslernfahrt SL sowie der nicht-angetriebenen Bewegungsabläufe über- die entsprechende erste Teststrecke TS1 bzw. zweite Teststrecke TS2.

Fig. 3     ein Flussdiagramm des erfindungsgemässen Verfahrens zur Anwendung bei der Steuerung einer Aufzugsschiebetüre nach Fig. 1 mittels der angegebenen erfindungsgemässen Einrichtung.

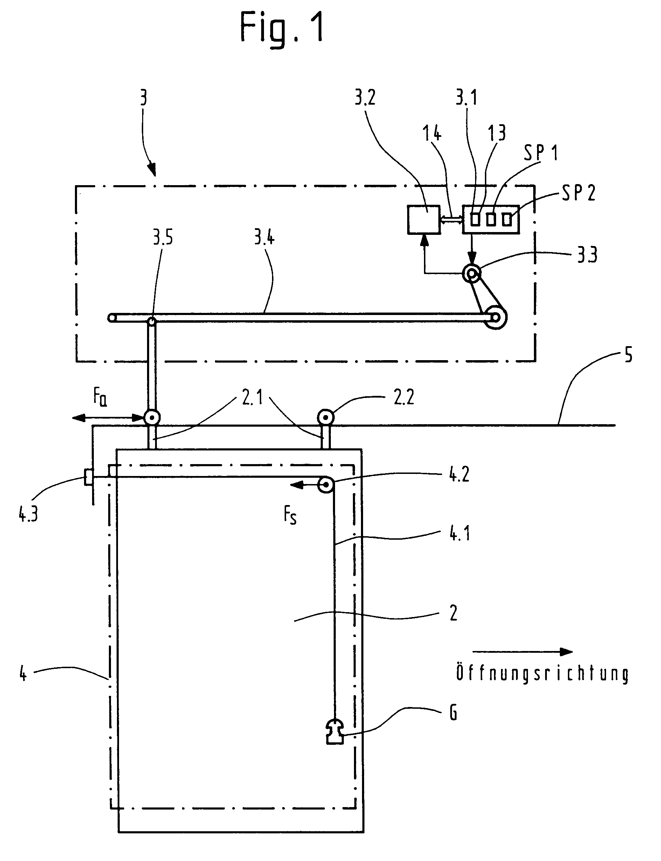

Im Anwendungsbeispiel der Figur 1 ist das Massesystem, von dem physikalische Kenngrössen bestimmt werden sollen, durch ein automatisches Schiebetürsystem 1 für eine Aufzugskabine dargestellt, welches im wesemtlichen in altbekannter Weise ausgebildet ist: Für jede Kabine ist ein Türantrieb vorgesehen, der mit der zugehörigen Kabinenschiebetüre permanent und mit der Schachtschiebetüre eines Stockwerkes über eine Kupplung verbunden ist, wobei im folgenden einfachheitshalber nur einer der beiden Schiebetürflügel dargestellt wird. Die Erfindung betrifft lediglich das Verfahren und die entsprechende Vorrichtung zur Bestimmung der dynamischem Masse md und der mittleren Reibkraft Fr* eines solchen Schiebetürsystems 1. Das in Frontansicht gezeigte automatische Schiebetürsystem 1 besteht aus einem Türflügel 2, einem Türantrieb 3 und einer Notschliessanordnung 4 mit Schliessgewicht G. Der Türflügel 2 ist an der Oberseite über Aufhängungen 2.1 und Laufrollen 2.2 in einer Laufschiene 5 horizontal verschiebbar geführt und läuft an seiner Unterseite mit geringer Reibung z.B. in einer entsprechenden Führung einer nicht weiter dargestellten festliegenden Bodenschwelle. Wenn auch in der nachfolgenden Beschreibung der Einfachheit halber lediglich von einem einzigen Türflügel 2 die Rede ist, so ist es doch selbstverständlich, dass dieselbe Anordnung auch für mehrgliedrige Türflügel 2 anwendbar ist. Der Türantrieb 3 enthält einen Mikroprozessor 3.1, einen Inkrementalgeber 3.2 und einen Türmotor 3.3 dessen Antriebskraft Fa über den Seilzug 3.4 und den Mitnehmer 3.5 auf den Türflügel 2 übertragen wird, um diesen zu öffnen oder zu schliessen. Der Inkrementalgeber 3.2 ist am Türmotor 3.3 oder an einer beliebigen anderen Stelle innerhalb des Türantriebes 3 angekoppelt. Von entscheidender Bedeutung für das erfindungsgemässe Verfahren ist die Notschliessanordnung 4. Diese enthält ein Schliessgewicht G mit der Masse mG, das über eine Schliessgewichtsaufhängung bestehend aus Schliessgewichtsseil 4.1 und Umlenkrolle 4.2 frei hängend mit dem Befestigungspunkt 4.3 im Schacht verbunden ist. Aufgrund dieser Anordnung ergibt sich eine Schliessgewichtskraft Fs, welche mit dem Betrag mG·g über die Umlenkrolle 4.2 am Türflügel 2 angreift. Diese Schliessgewichtskraft Fs wirkt bei allen Türstellungen, permanent und in Schliessrichtung und soll den Türflügel 2 im Notfalle selbsttätig schliessen. Solche Notschliessanordnungen 4 sind nach den einschlägigen Sicherheitsbestimmungen gefordert, damit die Schachttürflügel auch im Störfalle selbsttätig schliessen und den Aufzugsschacht sichern. Schiebetüren für Hochleistungsaufzüge sind deshalb mit Schliessgewichten G ausgerüstet. Damit die Funktion der Notschliessanordnung 4 bei allen Reibungsverhältnissen gewährleistet ist, muss die Schliessgewichtskraft Fs grösser sein als die maximale, bei jeder möglichen Stellung des Türflügels 2 auftretende Haftreibkraft Fhmax. Bei Normalbetrieb wird der Türflügel 2 durch Horizontalverschiebung mittels des Türantriebes 3 geöffnet und geschlossen, wobei die Schliessgewichtskraft Fs beim Öffnen der Antriebskraft Fa entgegenwirkt und beim Schliessen zu ihr gleichgerichtet ist.

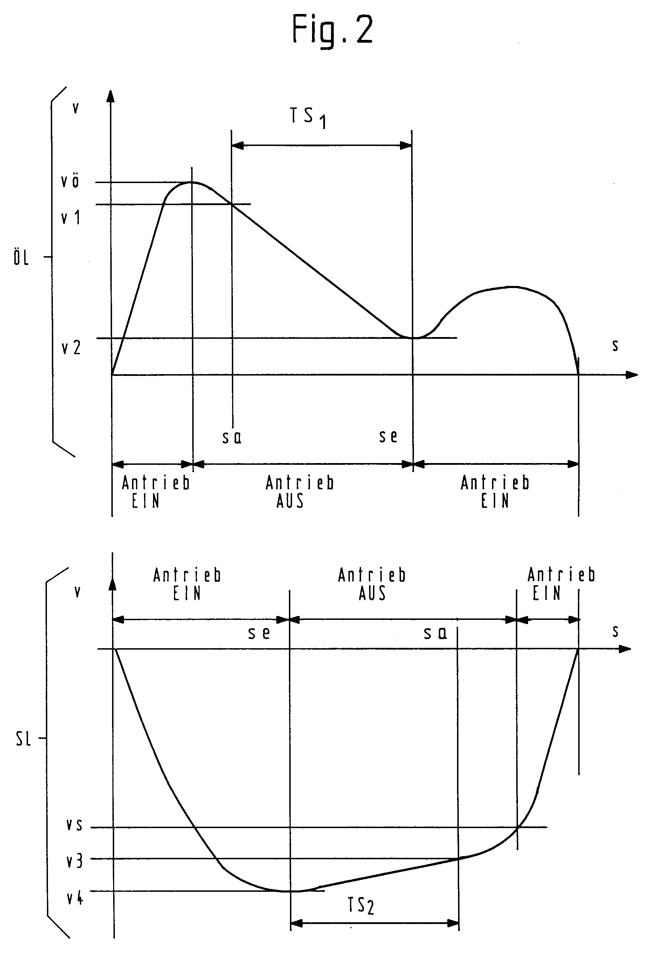

In der Figur 2 sind die Öffnungslernfahrt ÖL und die Schliesslernfahrt SL, wie sie zur experimentellen Bestimmung der dynamischen Masse md und der mittleren Reibkraft Fr* des Schiebetürsystems 1 für eine Aufzugskabine verwendet werden, durch je ein Geschwindigkeits-/Wegdiagramm näher erläutert. Im obere Teil der Fig. 2 wird im Rahmen der Öffnungslernfahrt ÖL der Türflügel 2 aus dem geschlossenen Zustand heraus bis auf eine bestimmte Öffnungsgeschwindigkeit vö beschleunigt, der Türantrieb 3 dann abgeschaltet und im Wegpunkt sa, bei der sich ergebenden Türflügelgeschwindigkeit v1 mit Motorstrom 0 in die erste Teststrecke TS1 eingefahren. Diese Teststrecke TS1 wird dann bei abgeschaltetem Türantrieb 3, aber unter Abbremsung durch das Schliessgewicht G, mit abnehmender Geschwindigkeit befahren und nach Zurücklegen der Wegstecke s1 bei der immer noch positiven Türflügelgeschwindigkeit v2 verlassen. Danach erfolgt Reaktivierung des Türantriebes 3 um den Türflügel 2 vollständig zu öffnen. Zweck der Öffnungslernfahrt ÖL ist die parametrische Charakterisierung der freien, aber durch das Schliessgewicht G gebremsten Öffnungsbewegung. Hierzu werden die Türflügelgeschwindigkeiten v1 und v2 sowie die Wegstrecke s1 vom ohnehin vorhandenen Mikroprozessor 3.1 des Türantriebes 3 mit Hilfe des ohnehin vorhandenen Inkrementalgebers 3.2 gemessen und für den späteren Gebrauch abgespeichert.

Die entsprechende Schliesslernfahrt SL ist im unteren Teil der Fig. 2 ebenfalls als Geschwindigkeits-/Wegdiagramm dargestellt. Dabei wird der Türflügel 2 aus dem geöffneten Zustand heraus bis auf eine bestimmte Schliessgeschwindigkeit vs beschleunigt, der Türantrieb 3 dann abgeschaltet und im Wegpunkt sa bei der sich ergebenden Türflügelgeschwindigkeit v3 mit Motorstrom 0 in die zweite Teststrecke TS2 eingefahren. Diese Teststrecke TS2 wird dann bei abgeschaltetem Türantrieb 3, aber unter Antrieb durch das Schliessgewicht G, mit konstanter oder zunehmender Geschwindigkeit befahren und nach Zurücklegen der Wegstecke s2 bei der immer noch negativen Türflügelgeschwindigkeit v4 verlassen. Danach erfolgt Reaktivierung des Türantriebes 3 um den Türflügel 2 vollständig zu schliessen. Zweck der Schliesslernfahrt SL ist ebenfalls die parametrische Charakterisierung der freien, aber durch das Schliessgewicht G angetriebenen Schliessbewegung. Hierzu werden in diesem Falle die Türflügelgeschwindigkeiten v3 und v4 sowie die Wegstrecke s2 vom ohnehin vorhandenen Mikroprozessor 3.1 des Türantriebes 3 mit Hilfe des ohnehin vorhandenen Inkrementalgebers 3.2 gemessen und für den späteren Gebrauch abgespeichert.

Da es sich im vorliegenden Anwendungsbeispiel um ein Schiebetürsystem 1 handelt sind die Türflügelgeschwindigkeiten v1,v2,v3 und v4 translatorische Geschwindigkeiten.

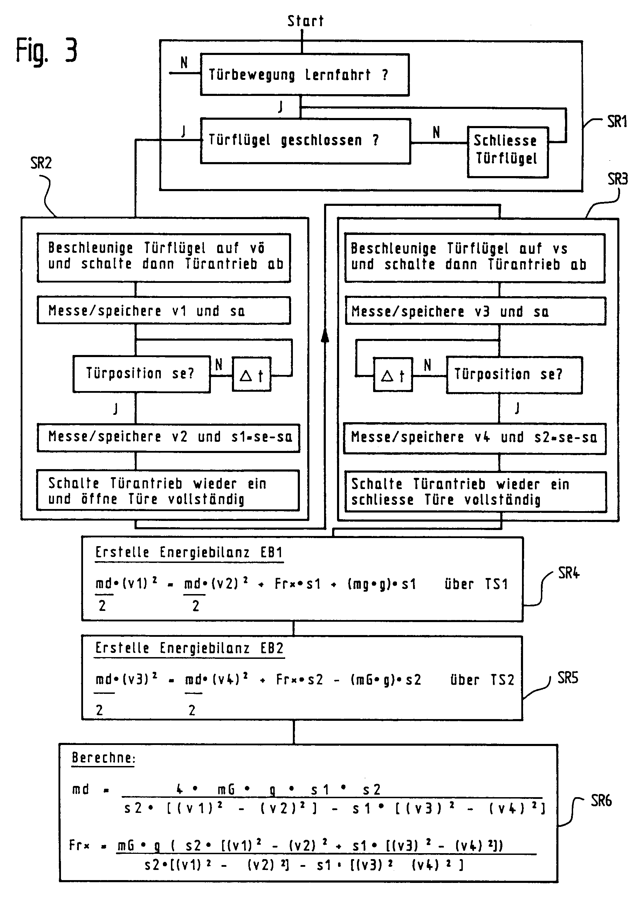

Die bevorzugte, zur Darstellung des erfindungsgemässen Verfahrens gewählte Ausführungsvariante soll nun anhand der Figur 3 im Detail erläutert werden. Dabei ist der entsprechende, im Mikroprozessor 3.1 des Türantriebes 3 implementierte Algorithmus schematisch als Flussdiagramm dargestellt. Diese bevorzugte Ausführungsvariante ist dadurch gekennzeichnet, dass es sich beim Massesystem von dem physikalische Kenngrössen bestimmt werden sollen, um ein Schiebetürsystem für Aufzugskabinen handelt, dass bei der energetischen Betrachtung die potentielle Energie Ep des Schliessgewichtes G sowie die kinetische Ernegie Ek und die Reibungsenergie Er aller Anlageteile betrachtete werden, und dass die dynamische Masse md und die mittlere Reibkraft Fr* die zu bestimmenden physikalische Kenngrössen sind. Bei der Darstellung des Flussdiagrammes wird von den Verfahrensschritten ausgegangen, die der Erfindung zugrunde liegen und vorausgesetzt, dass die Öffnungsrichtung und die Türbreite bereits ermittelt wurden und somit bekannt sind. In Fig. 3 beginnt das erfindungsgemässe Verfahren mit einem ersten Schritt 1, mit dem sichergestellt wird, dass es sich bei den beiden vorgesehenen Türbewegungen um Lernfahrten handelt und dass der Türflügel 2 sich in vollständig geschlossenem Zustand befindet. Bei der ersten Lernfahrt handelt es sich um die Öffnungslernfahrt ÖL, wie sie im nachfolgenden Schritt 2 dargestellt ist. Hierzu wird der Türflügel 2 aus dem geschlossenen Zustand heraus bis auf die positive Öffnungsgeschwindigkeit vö beschleunigt und der Türantrieb 3 dann abgeschaltet. Dabei ist vö so gewählt, dass unter Berücksichtigung von Reibung und Schliessgewichtskraft Fs die nun folgende Teststrecke TS1 bis an ihr Ende mit abnehmender aber doch positiver Geschwindigkeit durchfahren wird. Nachdem der Motorstrom 0 ist, wird die Türflügelgeschwindigkeit v1 und die entsprechende Türflügelposition sa am Anfang der Teststrecke TS1 gemessen und abgespeichert. Es wird dann bis zu einer Türflügelposition se am Ende der Teststrecke TS1 gefahren und der zurückgelegte Weg s1=se-sa sowie die Türgeschwindigkeit v2 bei Position se gemessen und abgespeichert. Danach wird der Türantrieb 3 wieder aktiviert, um die Türe vollständig zu öffnen. Zur Messung und Speicherung der Türflügelgeschwindigkeiten v1 und v2 sowie der Länge s1 der Teststrecke TS1 dienen der Mikroprozessor 3.1 sowie der Inkrementalgeber 3.2 im Türantrieb 3. Es werden also keine zusätzlichen Messeinrichtungen benötigt, welche Fehlerquellen darstellen könnten.

Nach ausgeführter Öffnungslernfahrt ÖL erfolgt in Schritt 3 die Schliesslernfahrt SL. Dabei wird der Türflügel 2 aus dem geöffneten Zustand heraus bis auf die negative Schliessgeschwindigkeit vs beschleunigt und der Türantrieb 3 dann abgeschaltet. Die Schliessgeschwindigkeit vs ist so gewählt, dass unter Berücksichtigung von Reibung und Schliessgewichtskraft die Teststrecke TS2 nicht-angetrieben, bis an ihr Ende mit negativer und im allgemeinen auch veränderlicher Geschwindigkeit durchfahren wird. Nachdem der Motorstrom 0 ist, wird die Türgeschwindigkeit v3 und die entsprechende Türposition sa am Anfang der Teststrecke TS2 gemessen und abgespeichert; bis zu einer Türposition se am Ende der Teststrecke TS2 gefahren und der zurückgelegte Weg s2=se-sa sowie die entsprechende Türgeschwindigkeit v4 bei Position se gemessen und abgespeichert. Danach wird der Türantrieb 3 wieder aktiviert, um die Türe vollständig zu schliessen.

Wieder werden die Türflügelgeschwindigkeiten v3 und v4 am Anfang bzw. am Ende der Teststrecke TS2 sowie deren Länge s2 mit Hilfe des Mikroprozessors 3.1 und des Inkrementalgebers 3.2 gemessen und abgespeichert.

Die nachfolgenden Schritte 4 und 5 dienen dazu, die Energiebilanzen EB1 und EB2 für die erste Teststrecke TS1 bzw. die zweite Teststrecke TS2 aufzustellen. Dabei geht das Verfahren von der physikalischen Gesetzmässigkeit aus, dass die Gesamtenergie in einem energetisch abgeschlossenen System konstant ist. Dies trifft in unserem Falle für das Durchfahren der beiden Teststrecken TS1 und TS2 zu, da der Türantrieb 3 während des Durchfahrens dieser Teststrecken abgeschaltet ist und somit dem Schiebetürsystem 1 während dieser Zeit Energie weder zugeführt noch entzogen werden kann. Die Änderung der Bewegungsenergie - festgestellt durch die Änderung der Geschwindigkeit des Türflügels 2 - wird hervorgerufen durch Umsetzen von kinetischer Energie Ek in Reibungsenergie Er und potentielle Energie Ep. Von Bedeutung ist nun, dass gemäss dem erfindungsgemässen Verfahren nicht irgend ein Schliessgewicht G verwendet wird, sondern ein genau definiertes, dessen Masse mG also bekannt ist. Dabei wird vorausgesetzt, dass die Masse mS des Seilstückes S zwischen Schliessgewicht G und Umlenkrolle 4.2 bezogen auf die Masse mG des Schliessgewichtes G vernachlässigbar klein ist. Trifft dies nicht zu, muss diese Seilmasse mS in die Berechnung miteinbezogen werden, indem sie zur Masse des Schliessgewichtes G addiert wird. Da aber die Seilmasse mS zwischen Umlenkrolle und Schliessgewicht während des Durchfahrens der Teststrecken TS1 und TS2 variabel ist, wird die mittlere Seillänge (11+12) /2 in die Berechnung eingesetzt. Bekannt ist ferner die Erdbeschleunigung g als Naturkonstante. Aufgrund der in Schritt 2 gemessenen und abgespeicherten Grössen, nämlich der Türflügelgeschwindigkeiten v1 und v2 sowie der Wegstrecke s1 wird deshalb in einem nächsten Schritt 4 die Energiebilanz EB1 für die Teststrecke TS1 aufgestellt. Von Bedeutung ist dabei, dass die potentielle Energie Ep des Schliessgewichtes G über die Teststrecke TS1 zunimmt und diese Energiezunahme mit positivem Vorzeichen in die Energiebilanz EB1 eingeht. Es ergibt sich somit für EB1:

$$\underbrace{\overbrace{\left|\frac{md}{2}\cdot(v1)^2\right|}^{Ek}}_{\text{Anfang TS1}} = \underbrace{\overbrace{\left|\frac{md}{2}\cdot(v2)^2\right|}^{Ek} + \overbrace{\left|Fr*\cdot s1\right|}^{Er} + \overbrace{\left|(mg\cdot g)\cdot s1\right|}^{Ep}}_{\text{Ende TS1}} \quad (I)$$

EB1:

In analoger Weise ergibt sich in Schritt 5 die Energiebilanz EB2 für die Teststrecke TS2, wobei diesmal die potentielle Energie Ep des Schliessgewichtes G über die Teststrecke TS2 abnimmt und diese Energieabnahme mit negativem Vorzeichen in die Energiebilanz EB2 eingeht.

$$\text{EB2:} \quad \underbrace{\left|\frac{md \cdot (v3)^2}{2}\right|}_{\text{Anfang TS2}} = \underbrace{\left|\frac{md \cdot (v4)^2}{2}\right| + \left|Fr^* \cdot s2\right| - \left|(mG \cdot g) \cdot s2\right|}_{\text{Ende TS2}} \quad \text{(II)}$$

Schliesslich werden in einem letzten Schritt 6 die Formeln zur Bestimmung der dynamischem Masse md sowie der mittleren Reibkraft Fr* gewonnen. Die beiden Energiebilanzen EB1 und EB2 stellen nämlich Gleichungen dar, die wegen der unterschiedlichen Wirkung des Schliessgewichtes beim Öffnen und Schliessen voneinander unabhängig sind und demnach nach md und Fr* aufgelösst werden können.

$$md = \frac{4 \cdot mG \cdot g \cdot s1 \cdot s2}{s2[(v1)^2 - (v2)^2] - s1 \cdot [(v3)^2 - (v4)^2]} \quad \text{(III)}$$

$$Fr^* = \frac{mG \cdot g \{ s2 \cdot [(v1)^2 - (v2)^2 + s1 \cdot [(v3)^2 - (v4)2]\}}{s2 \cdot [(v1)^2 - (v2)^2] - s1 \cdot [(v3)^2 - (v4)^2]} \quad \text{(IV)}$$

Aus der dynamischen Masse md ergibt sich die sicherheitstechnisch maximal zulässige Schliessgeschwindigkeit vmax für den Türflügel 2 eines Schiebetürsystems 1 wie folgt:

$$vsmax = \sqrt{\frac{2 \cdot W}{md}} \quad \text{(V)}$$

mit:

W : sicherheitstechnisch maximal zulässige Schliessenergie einer Aufzugsschiebetüre (1)

Es ist für den Fachmann naheliegend, dass die Erfindung nicht auf das vorgenannte Ausführungsbeispiel beschränkt ist. Insbesondere ist sie allgemein auch für vertikale Schiebetüren oder für Schwenktüren geeignet. In diesen Fällen werden die dynamische Masse sowie die mittlere Reibkraft aller Anlageteile auf die vertikale Translationsbewegung bzw. die Rotationsbewegung des Türflügels bezogen. Weiter können in den Energiebilanzen andere Energiearten enthalten sein und daraus andere physikalische Kenngrössen ermittelt werden.

## Patentansprüche

1. Verfahren zur Bestimmung der dynamischen Masse und der mittleren Reibkraft einer Aufzugstüre, bei dem ein Massesystem mindestens einem, eine nicht-angetrieben durchfahrene Teststrecke (TS) aufweisenden Bewegungsablauf unterzogen wird und aus dabei gemessenen kinematischen Parametern mindestens ein weiterer, das Massesystem charakterisierender Parameter berechnet wird,
dadurch gekennzeichnet,
dass das Schiebetürsystem (1) einer Öffnungslernfahrt (ÖL) und einer Schliesslernfahrt (SL) unterzogen wird, wobei für zwei durchfahrene Teststrecken (TS1, TS2) unter Berücksichtigung der zurückgelegten und gemessenen Wegstrecken (s1, s2) die Energiebilanzen (EB1, EB2) der Bewegungsabläufe erstellt und mittels einem Mikroprozessor (3.1), nach speziellen Formeln, die dynamische Masse (md) und die mittlere Reibkraft (Fr*) berechnet werden.

2. Verfahren nach Anspruch 1, dadurch gekennzeichnet,
dass für die beiden Bewegungsabläufe über die erste Teststrecke (TS1) bzw. die zweite Teststrecke (TS2) zusätzlich zur potentiellen Energie (Ep) des Schliessgewichtes (G) die kinetische Energie (Ek) und die Reibungsenergie (Er) aller Anlageteile berücksichtigt werden und dass die entsprechenden Energiebilanzen (EB1,EB2) durch folgende Beziehungen dargestellt sind:

$$Ek \qquad Er \qquad Ep$$

$$EB1: \qquad \frac{md}{2}\cdot(v1)^2 = \frac{md}{2}\cdot(v2)^2 + Fg^*\cdot s1 + (mG\cdot g)\cdot s1$$

$$EB2: \qquad \frac{md}{2}\cdot(v3)^2 = \frac{md}{2}\cdot(v4)^2 + Fg^*\cdot s2 - (mG\cdot g)\cdot s2$$

mit

md : dynamische Masse des Schiebetürsystems (1)
v1 : positive Türflügelgeschwindigkeit am Anfang der ersten Teststrecke (TS1)
v2 : positive Türflügelgeschwindigkeit am Ende der ersten Teststrecke (TS1)
s1 : Länge der ersten Teststrecke (TS1)
Fr* : mittlere Reibkraft des Schiebetürsystems (1)
mG : Masse des Schliessgewichtes (G)
g : Erdbeschleunigung
v3 : negative Türflügelgeschwindigkeit am Anfang der zweiten Teststrecke (TS2)
v4 : negative Türflügelgeschwindigkeit am Ende der zweiten Teststrecke (TS2)
s2 : Länge der zweiten Teststrecke (TS2)

3.  Verfahren nach Anspruch 2, dadurch gekennzeichnet,
    dass die dynamische Messe (md) sowie die mittlere Reibkraft (Fr*) nach folgenden speziellen Formeln berechnet werden:

$$md = \frac{4\cdot mG\cdot g\cdot s1\cdot s2}{s2\cdot[(v1)^2 - (v2)^2] - s1\cdot[(v3)^2 - (v4)^2]}$$

$$Fg^* = \frac{mG\cdot g\cdot\{s2\cdot[(v1)^2 - (v2)^2] + s1\cdot[(v3)^2 - (v4)^2]\}}{s2\cdot[(v1)^2 - (v2)^2] - s1\cdot[(v3)^2 - (v4)^2]}$$

4.  Verfahren nach Anspruch 1, dadurch gekennzeichnet,
    dass zur Erhöhung der Genauigkeit des Verfahrens die Seilmasse (mS) des Seilstückes (S) zwischen Schliessgewicht (G) und Umlenkrolle (4.2) zur Schliessgewichtsmasse (mG) addiert wird, und dass zur Berechnung der Seilmasse (mS) die mittlere Seillänge l* = (l1+l2) / 2 verwendet wird.
    mit:

    l1 : Länge des Seilstückes zwischen Schliessgewicht (G) und Umlenkrolle (4.2) zu Beginn von TS1/TS2
    l2 : Länge des Seilstückes zwischen Schliessgewicht (G) und Umlenkrolle (4.2) am Ende von TS1/TS2

5.  Verfahren nach Anspruch 1, dadurch gekennzeichnet,
    dass zur Erhöhung der Genauigkeit des Verfahrens das Schliessgewicht (G) wie folgt durch die maximale Haftreibkraft (Fhmax) gegeben ist:

$$mG\cdot g \cong 2\cdot Fhmax$$

6.  Verfahren nach Anspruch 1, dadurch gekennzeichnet,
    dass zur Elimination der Fehlerbeeinflussung durch die Positionsabhängigkeit der Reibkraft (Fr) die erste und die zweite Teststrecke (TS1,TS2) auf das gleiche Wegstück der Laufschiene (5) gelegt werden.

7.  Verfahren nach Anspruch 1, dadurch gekennzeichnet,
    dass zur Elimination der Fehlerbeeinflussung durch die Geschwindigkeitsabhängigkeit der Reibkraft (Fr) die Geschwindigkeiten (v1,v2) und (v3,v4) für die erste bzw. zweite Teststrecke (TS1) bzw.(TS2) wie folgt gewählt werden:

$$v3 = (v1 + v2) / 2 \cong v4$$

8. Verfahren nach Anspruch 1, dadurch gekennzeichnet,
dass aus der dynamischen Masse einer Aufzugsschiebetüre deren maximal zulässige Schliessgeschwindigkeit (vsmax) wie folgt ermittelt wird

$$vsmax = \sqrt{\frac{2 \cdot W}{md}}$$

mit:

W :     sicherheitstechnisch maximal zulässige Schliessenergie eines Schiebetürsystems (1)

9. Vorrichtung zur Durchführung des Verfahrens nach Anspruch 1, mit einem Antriebsmotor (3.3), dessen Antriebsdrehung durch Getriebe- und Kupplungsmittel in eine Translationsbewegung mindestens eines Antriebsteiles umgewandelt wird, zur gleichzeitigen Betätigung der Kabinen- und der jeweiligen Schachttüre und weiter mit einer Steuer- und Regeleinrichtung für die Türbewegung enhaltend einen Mikroprozessor (3.1), der einerseits mit einem Inkrementalgeber (3.2) zur Erzeugung von Impulsen mit zur Geschwindigkeit der bewegbaren Abtriebseinrichtung proportionalen Impulsfrequenz und andererseits mit einer Leistungselektronik zur Stromspeisung des Antriebsmotors (3.3) in elektrischer Verbindung steht, dadurch gekennzeichnet,
dass der Mikroprozessor (3.1) des Türantriebes (3) einen Abtaster (13) enthält und mit dem Inkrementalgeber (3.2) über einen Datenbus (14) in bidirektionaler Verbindung steht und einen Weg- und Geschwindigkeitsspeicher (SP1) zur Speicherung der jedem angetasteten Weginkrement zugeorneten Türflügelgeschwindigkeit aufweist und weiter einen Parameterspeicher (SP2) besitzt, in dem die kinematischen Parameter (v1,v2,s1) der ersten Teststrecke (TS1) und die kinematischen Parameter (v3,v4,s2) der zweiten Teststrecke (TS2) abgespeichert sind.

## Claims

1. Method for ascertaining the dynamic mass and the mean frictional force of a lift door, in which a mass system is subjected to at least one course of movement having a test section (TS) traversed without drive and at least one further parameter characterising the mass system is computed from kinematic parameters measured in that case, characterised thereby that the sliding door system (1) is subjected to an opening learning travel (ÖL) and a closing learning travel (SL), wherein the energy balances (EB1, EB2) of the movement courses are set up for two test sections (TS1, TS2), which are carried out, with consideration of the traversed and measured travel paths (s1, s2) and the dynamic mass (md) and the mean frictional force (Fr*) are computed according to special formulae by means of a microprocessor.

2. Method according to claim 1, characterised thereby, that the kinetic energy (Ek) and the frictional energy (Er) of all installation parts are taken into consideration in addition to the potential energy (Ep) of the closing weight (G) for both the courses of movement respectively over the first test section (TS1) and the second test section (TS2) and that the corresponding energy balances (EB1, EB2) are accordingly represented by the following relationships:

$$\underline{\text{EB1:}} \qquad \overset{Ek}{\underset{2}{\underline{md}\cdot(v1)^2}} = \overset{Er}{\underset{2}{\underline{md}\cdot(v2)^2}} + Fg^*\cdot s1 + \overset{Ep}{(mG\cdot g)\cdot s1}$$

$$\underline{\text{EB2:}} \qquad \frac{\underline{md}\cdot(v3)^2}{2} = \frac{\underline{md}\cdot(v4)_2}{2} + Fg^*\cdot s2 - (mG\cdot g)\cdot s2$$

wherein

md = dynamic mass of the sliding door system (1),
v1 = positive door leaf speed at the beginning of the first test section (TS1),
v2 = positive door leaf speed at the end of the first test section (TS1),
s1 = length of the first test section (TS1),
Fr* = mean frictional force of the sliding door sytem (1),
mG = mass of the closing weight (G),
g = gravitational acceleration,
v3 = negative door leaf speed at the beginning of the second test section (TS2),
v4 = negative door leaf speed at the end of the second test section (TS2) and
s2 = length of the second test section (TS2).

3. Method according to claim 2, characterised thereby, that the dynamic mass (md) as well as the mean frictional force (Fr*) are computed according to the following special formulae:

$$md = \frac{4\cdot mG\cdot g\cdot s1\cdot s2}{s2\cdot[(v1)^2-(v2)^2] - s1\cdot[(v3)^2-(v4)^2]}$$

$$Fg^* = \frac{mG\cdot g\cdot\{s2\cdot[(v1)^2-(v2)^2] + s1\cdot[(v3)^2-(v4)^2]\}}{s2\cdot[(v1)^2-(v2)^2] - s1\cdot[(v3)^2-(v4)^2]}$$

4. Method according to claim 1, characterised thereby, that to increase the accuracy of the method, the cable mass (mS) of the cable piece (S) between the closing weight (G) and the guide roller (4.2) is added to the closing weight mass (mG) and that the mean cable length l* = (l1+l2)/2 is used for the computation of the cable mass (mS), wherein

l1 = length of the cable piece between the closing weight (G) and the guide roller (4.2) at the beginning of TS1/TS2 and
l2 = length of the cable piece between the closing weight (G) and the guide roller 4.2 at the end of TS1/TS2.

5. Method according to claim 1, characterised thereby, that to increase the accuracy of the method, the closing weight (G) is given as following by the maximum static friction force (Fhmax):

$$mG \cdot g \cong 2\cdot Fhmax.$$

6. Method according to claim 1, characterised thereby, that to eliminate the error influence due to the positional dependence of the frictional force (Fr), the first test section (TS1) and the second test section (TS2) are placed on the same portion of the running rail (5).

7. Method according to claim 1, characterised thereby, that to eliminate the error influence due to the speed dependence of the frictional force (Fr), the speeds (v1, v2) and (v3, v4) respectively for the first test section (TS1) and for the second test section (TS2) are chosen as following:

$$v3 = (v1 + v2)/2 \cong v4.$$

**8.** Method according to claim 1, characterised thereby, that the maximum permissible closing speed (vsmax) of a sliding door of a lift is determined as following from the dynamic mass of the door:

$$vsmax = \sqrt{\frac{2 \cdot W}{md}}$$

wherein W is the closing energy, that is maximally permissible in terms of safety technique, of a sliding door system (1).

**9.** Device for the performance of the method according to claim 1, with a drive motor (3.3), the driving rotation of which is converted by gear means and coupling means into a translational movement of at least one drive part for the simultaneous actuation of the cage door and of the respective shaft door, and furthermore with a controlling and regulating equipment for the door movement, which equipment contains a microprocessor (3.1) standing in electrical connection on the one hand with an incremental transmitter (3.2) for the generation of pulses at a pulse frequency proportional to the speed of the movable driving equipment and on the other hand with an electronic power system for the current feed of the drive motor (3.3),
characterised thereby, that the microprocessor (3.1) of the door drive (3) contains a scanner (13), stands in bidirectional connection by way of a data bus (14) with the incremental transmitter (3.2), comprises a travel and speed store (SP1) for the storage of the door leaf speed associated with each scanned increment of travel and furthermore possesses a parameter store (SP2), in which the kinematic parameters (v1, v2, s1) of the first test section (TS1) and the kinematic parameters of the second test section (TS2) are stored.

## Revendications

**1.** Procédé pour déterminer la masse dynamique et la force de frottement moyenne d'une porte d'ascenseur, selon lequel un système de masse est soumis à au moins un processus de mouvement comportant une course de test (TS) effectuée sans être commandée, et à partir des paramètres cinématiques mesurés est calculé au moins un autre paramètre caractérisant le système de masse,
caractérisé en ce que le système de porte coulissante (1) est soumis à un trajet d'apprentissage d'ouverture (ÖL) et à un trajet d'apprentissage de fermeture (SL), moyennant quoi les bilans énergétiques (EB1, EB2) des processus de mouvement sont établis pour deux courses de test (TS1, TS2) effectuées, compte tenu des distances parcourues et mesurées (s1, s2), et la masse dynamique (md) et la force de frottement moyenne (Fr*) sont calculées à l'aide d'un microprocesseur (3.1) suivant des formules spéciales.

**2.** Procédé selon la revendication 1, caractérisé en ce que pour les deux processus de mouvement sur les première (TS1) et seconde (TS2) courses de test, on tient compte, en plus de l'énergie potentielle (Ep) du poids de fermeture (G), de l'énergie cinétique (Ek) et de l'énergie de frottement (Er) de toutes les pièces de l'installation, et en ce que les bilans énergétiques correspondants (EB1, EB2) sont représentés par les relations suivantes :

$$
\begin{array}{cccc}
Ek & Er & & Ep \\
\end{array}
$$

$$EB1: \quad \frac{md \cdot (v1)^2}{2} = \frac{md \cdot (v2)^2}{2} + Fg^* \cdot s1 + (mG \cdot g) \cdot s1$$

$$EB2: \quad \frac{md \cdot (v3)^2}{2} = \frac{md \cdot (v4)^2}{2} + Fg^* \cdot s2 - (mG \cdot g) \cdot s2$$

avec :

md : masse dynamique du système de porte coulissante (1)

v1 : vitesse de battant de porte positive au début de la première course de test (TS1)

v2 : vitesse de battant de porte positive à la fin de la première course de test (TS1)

s1 : longueur de la première course de test (TS1)

Fr* : force de frottement moyenne du système de porte coulissante (1)

mG : masse du poids de fermeture (G)

g : accélération terrestre

v3 : vitesse de battant de porte négative au début de la seconde course de test (TS2)

v4 : vitesse de battant de porte négative à la fin de la seconde course de test (TS2)

s2 : longueur de la seconde course de test (TS2).

3. Procédé selon la revendication 2, caractérisé en ce que la masse dynamique (md) et la force de frottement moyenne (Fr*) sont calculées d'après les formules spéciales suivantes :

$$md = \frac{4 \cdot mG \cdot g \cdot s1 \cdot s2}{s2 \cdot [(v1)^2 - (v2)^2] - s1 \cdot [(v3)^2 - (v4)^2]}$$

$$Fg^* = \frac{mG \cdot g \cdot \{s2 \cdot [(v1)^2 - (v2)^2] + s1 \cdot [(v3)^2 - (v4)^2]\}}{s2 \cdot [(v1)^2 - (v2)^2] - s1 \cdot [(v3)^2 - (v4)^2]}$$

4. Procédé selon la revendication 1, caractérisé en ce que pour augmenter la précision du procédé, on ajoute à la masse de poids de fermeture (mG) la masse de câble (mS) du câble (S) prévu entre le poids de fermeture (G) et la poulie de renvoi (4.2), et en ce qu'on utilise pour le calcul de la masse de câble (mS) la longueur de câble moyenne l* = (l1+l2)/2 , avec :

l1 : longueur du câble entre le poids de fermeture (G) et la poulie de renvoi (4.2) au début de TS1/TS2

l2 : longueur du câble entre le poids de fermeture (G) et la poulie de renvoi (4.2) à la fin de TS1/TS2.

5. Procédé selon la revendication 1, caractérisé en ce que, pour une plus grande précision du procédé, le poids de fermeture (G) est défini de la façon suivante par la force d'adhérence maximale (Fhmax) :

$$mG \cdot g \cong 2 \cdot Fhmax$$

6. Procédé selon la revendication 1, caractérisé en ce que pour éliminer l'influence d'erreurs due au fait que la force de frottement (Fr) dépend de la position, on place les première et seconde courses (TS1, TS2) sur la même partie du rail de roulement (5).

7. Procédé selon la revendication 1, caractérisé en ce que pour éliminer l'influence d'erreurs due au fait que la force de frottement (Fr) dépend de la vitesse, on choisit les vitesses respectives (v1, v2) et (v3, v4) pour les première et seconde courses de test (TS1) et (TS2) de la façon suivante :

$$v3 = (v1 + v2) / 2 \cong v4$$

8. Procédé selon la revendication 1, caractérisé en ce que la vitesse de fermeture maximale autorisée (vsmax) d'une porte d'ascenseur coulissante est calculée à partir de sa masse dynamique de la façon suivante :

$$vsmax = \sqrt{\frac{2 \cdot W}{md}}$$

avec :

W : énergie de fermeture maximale autorisée en termes de technique de sécurité pour un système de porte coulissante (1).

9. Dispositif pour la mise en oeuvre du procédé selon la revendication 1, comprenant un moteur d'entraînement (3.3) dont la rotation d'entraînement est transformée par des moyens de transmission et d'accouplement en un mouvement de translation d'au moins une pièce d'entraînement en vue de l'actionnement simultané de la porte de cabine et de la porte palière associée, et comprenant aussi un dispositif de contient un microprocesseur (3.1) relié par voie électrique d'une part à un générateur incrémentiel (3.2) prévu pour générer des impulsions suivant une fréquence d'impulsions proportionnelle à la vitesse du dispositif de sortie mobile, et d'autre part à un système électronique de puissance destiné à alimenter en courant le moteur d'entraînement (3.3),

caractérisé en ce que le microprocesseur (3.1) de l'entraînement de porte (3) contient un échantillonneur (13), est relié au générateur incrémentiel (3.2) par l'intermédiaire d'un bus de données (14) suivant une liaison bidirectionnelle, comporte une mémoire de distances et de vitesses (SP1) destinée à stocker la vitesse de battant de porte associée à chaque incrément de distance lu, et comporte enfin une mémoire de paramètres (SP2) dans laquelle sont stockés les paramètres cinématiques (v1, v2, s1) de la première course de test (TS1) et les paramètres cinématiques (v3, v4, s2) de la seconde course de test (TS2).

# Fig. 1

# Fig. 2

## Fig. 3

Start

**SR1**

| N | Türbewegung Lernfahrt ? |
|---|---|

J

| J | Türflügel geschlossen ? | N | Schliesse Türflügel |
|---|---|---|---|

**SR2**

Beschleunige Türflügel auf vö und schalte dann Türantrieb ab

Messe/speichere v1 und sa

| Türposition se? | N | △t |
|---|---|---|

J

Messe/speichere v2 und s1=se-sa

Schalte Türantrieb wieder ein und öffne Türe vollständig

**SR3**

Beschleunige Türflügel auf vs und schalte dann Türantrieb ab

Messe/speichere v3 und sa

| △t | N | Türposition se? |
|---|---|---|

J

Messe/speichere v4 und s2=se-sa

Schalte Türantrieb wieder ein schliesse Türe vollständig

**SR4**

Erstelle Energiebilanz EB1

$$\frac{md \cdot (v1)^2}{2} - \frac{md \cdot (v2)^2}{2} + Fr_x \cdot s1 + (mg \cdot g) \cdot s1 \qquad \text{über TS1}$$

**SR5**

Erstelle Energiebilanz EB2

$$\frac{md \cdot (v3)^2}{2} - \frac{md \cdot (v4)^2}{2} + Fr_x \cdot s2 - (mG \cdot g) \cdot s2 \qquad \text{über TS2}$$

**SR6**

Berechne:

$$md = \frac{4 \cdot mG \cdot g \cdot s1 \cdot s2}{s2 \cdot [(v1)^2 - (v2)^2] - s1 \cdot [(v3)^2 - (v4)^2]}$$

$$Fr_x = \frac{mG \cdot g \ (s2 \cdot [(v1)^2 - (v2)^2 + s1 \cdot [(v3)^2 - (v4)^2])}{s2 \cdot [(v1)^2 - (v2)^2] - s1 \cdot [(v3)^2 \quad (v4)^2]}$$